# FASCICULE DE BREVET EUROPEEN

(11) **EP 2 000 912 B1**
(45) Date de publication et mention de la délivrance du brevet: **14.06.2017**
(21) Numéro de dépôt: 08103943.0
(22) Date de dépôt: 14.05.2008
(51) Int. Cl.: G05B 19/05

(54) **Méthode de recherche d'anomalies dans le programme constructeur d'un module automate**
Verfahren zur Fehlersuche in dem Firmwareprogramm eines Automatisierungsmoduls
Method of searching for anomalies in the firmware program of an automation module

(30) Priorité: 24.05.2007 FR 0755241
(43) Date de publication de la demande: 10.12.2008
(73) Titulaire: Schneider Electric Industries SAS, 92500 Rueil-Malmaison (FR)
(72) Inventeur: Gomez, Gérard, 06150 Le Broc (FR); Loreaud, Gérard, 06410 Biot (FR)
(74) Mandataire: Dufresne, Thierry

(56) Documents cités:
- US-A- 4 802 116
- BALDISCHWEILER M ET AL: "Implementation of Intelligent Instrumentation and Design Conceptions Using Suitable Single Chip FLASH Controllers", INDUSTRIAL ELECTRONICS, 2005. ISIE 2005. PROCEEDINGS OF THE IEEE INTERNATIONAL SYMPOSIUM ON DUBROVNIK, CROATIA JUNE 20-23, 2005, PISCATAWAY, NJ, USA,IEEE, 20 juin 2005 (2005-06-20), pages 1081-1086, XP010850235, ISBN: 0-7803-8738-4
- Daniel Hertrich: "Information about RS232 serial communication and how to connect serial devices to the palmtop HP 200LX", ARTICLE INTERNET , 26 septembre 2006 (2006-09-26), pages 1-11, XP000002658573, Extrait de l'Internet: URL:http://web.archive.org/web/20060926022 741/http://www.daniel-hertrich.de/rs232/ [extrait le 2011-09-08]

## Description

La présente invention se rapporte à une méthode pour rechercher une anomalie dans le programme constructeur d'un module automate et à un système pour rechercher une anomalie dans le programme constructeur du module.

Un automate programmable ou PLC ("Programmable Logical Controller") est un équipement d'automatisme capable de piloter, commander et/ou surveiller un ou plusieurs process à commander.

De construction généralement modulaire, un automate programmable PLC est composé de différents modules qui communiquent entre eux par un bus de transmission, appelé dans ce domaine bus "fond de panier" (ou "backplane"). Les modules sont fixés mécaniquement dans un rack, lequel comprend un circuit imprimé qui supporte également le bus fond de panier ainsi que les éléments de connexion destinés à coopérer avec des connecteurs présents généralement sur la partie arrière des modules de manière à réaliser la liaison nécessaire entre les modules et le bus. Le nombre de modules dépend bien entendu de la taille et du type de process à automatiser.

Typiquement, un automate programmable peut comporter :
- un module d'alimentation fournissant les différentes tensions aux autres modules à travers le bus fond de panier.
- un module unité centrale UC qui comporte un logiciel embarqué, appelé programme constructeur ("firmware"), intégrant un système d'exploitation OS temps réel, et un programme d'application, ou programme utilisateur, contenant les instructions à exécuter par le logiciel embarqué pour effectuer les opérations d'automatisme souhaitées. Le module UC comporte aussi généralement une connexion en face avant vers des outils de programmation de type ordinateur personnel PC.
- des modules d'entrées/sorties E/S de divers types en fonction du process à commander, tels que E/S numériques ou TOR, analogiques, de comptage, etc. Ces modules E/S sont reliés à des capteurs et des actionneurs participant à la gestion automatisée du process.
- un ou plusieurs modules de communication vers des réseaux de communication (Ethernet, CAN, ...) ou des interfaces homme-machine (écran, clavier,...).

A titre d'exemple, un module d'entrées/sorties peut comporter entre 1 et 32 voies E/S, un automate PLC pouvant être capable suivant les modèles de gérer plusieurs centaines de voies E/S. En cas de besoin, plusieurs racks sont donc connectés entre eux dans un même PLC. Ainsi, en fonction de l'application et du process à automatiser, un automate PLC peut comporter un grand nombre de modules.

Certains modules spécifiques d'entrées/sorties comportent un microprocesseur et intègrent également une mémoire non volatile stockant un programme constructeur et une mémoire volatile dans laquelle est chargé leur programme constructeur pendant l'exécution.

Après leur sortie d'usine, ces modules dotés d'un microprocesseur peuvent présenter des anomalies entraînant un comportement anormal pouvant causer des défaillances importantes du process automatisé. Dans cette situation, le programme constructeur de ces modules doit être contrôlé avant d'être éventuellement réparé.

Pour rechercher la présence d'une anomalie dans le programme constructeur du module, il est nécessaire d'exécuter le programme constructeur à vide, par une commande extérieure. Actuellement, cette recherche d'anomalie est réalisée en dessoudant le microprocesseur et en le remplaçant par un support sur lequel est monté un émulateur de microprocesseur. La recherche d'anomalie dans le programme constructeur du module exige donc de modifier la structure du module. Actuellement, rien ne permet donc de réaliser cette recherche d'anomalie de manière simple, rapide et efficace, sans affecter le module.

Par ailleurs, il est connu du document US 4,802,116 un système doté d'un outil de recherche d'anomalies dans un programme application. Dans ce système l'outil de recherche d'anomalies est actif en permanence et est embarqué en totalité dans l'automate programmable à diagnostiquer. Le logiciel global permettant la recherche d'anomalies est donc particulièrement lourd et volumineux dans l'automate.

Le but de l'invention est de proposer une méthode et un système pour détecter une anomalie dans le programme constructeur d'un module d'automate programmable qui soit simple, rapide et efficace, qui ne modifie en rien ni le matériel ni le contenu de la mémoire volatile du module à diagnostiquer, qui puisse être activé uniquement lorsque cela est nécessaire sans nécessiter trop d'espace mémoire dans le module.

Ce but est atteint par un système pour rechercher une anomalie dans un programme constructeur stocké dans une mémoire non volatile d'un module d'un automate programmable, ledit système comportant une station informatique dotée d'outils logiciels de recherche d'anomalie, caractérisé en ce que :
- le système comporte un câble de liaison apte à relier le module à la station informatique, ledit câble comportant un organe d'identification,
- le module comporte un connecteur et des moyens logiciels d'identification du câble de liaison lorsque le câble de liaison est branché sur son connecteur,
- lorsque la présence du câble de liaison est détectée sur le connecteur, un mode recherche d'anomalies est lancé grâce à un composant logiciel stocké dans la mémoire non volatile du module,
- le composant logiciel étant apte à coopérer avec les outils logiciels de recherche d'anomalie de la station informatique pour rechercher une anomalie dans le programme constructeur du module.

Selon une particularité dé l'invention, l'organe d'identification du câble de liaison est une boucle apte à relier deux broches du connecteur lorsque le câble de liaison est branché sur le connecteur.

Selon une autre particularité, le composant logiciel du module comporte des moyens de dialogue pour dialoguer avec la station informatique sur la liaison créée grâce au câble de liaison.

Selon une autre particularité, le câble de liaison comporte à une extrémité un connecteur cinq points complémentaire du connecteur du module et à une autre extrémité un connecteur neuf points complémentaire d'un port série situé sur la station informatique.

Selon une autre particularité, le câble de liaison comporte une interface d'adaptation apte à convertir des signaux échangés entre la station informatique et le module.

L'invention concerne une méthode pour rechercher une anomalie dans un programme constructeur stocké dans une mémoire non volatile d'un module d'un automate programmable et chargé dans une mémoire volatile du module pour son exécution, ladite méthode utilisant une station informatique dotée d'outils logiciels de recherche d'anomalie. La méthode consiste à :
- relier le module à la station informatique à laide d'un câble de liaison doté d'un organe d'identification,
- détecter sur un connecteur du module la présence du câble de liaison à l'aide de moyens logiciels d'identification du câble de liaison,
- lorsque la présence du câble de liaison est détecté sur le connecteur, lancer un mode recherche d'anomalies grâce à un composant logiciel stocké dans la mémoire non volatile du module,
- sous contrôle du composant logiciel coopérant avec les outils logiciels de recherche d'anomalie de la station informatique, exécuter le programme constructeur dans la mémoire volatile du module pour rechercher une anomalie dans le programme constructeur du module.

D'autres caractéristiques et avantages vont apparaître dans la description détaillée qui suit en se référant à un mode de réalisation donné à titre d'exemple et représenté par les dessins annexés sur lesquels :
- la figure 1 montre le système de l'invention mis en place pour la recherche d'anomalie dans le programme constructeur d'un module d'automate programmable,
- la figure 2 représente schématiquement le câble utilisé pour mettre en oeuvre l'invention.

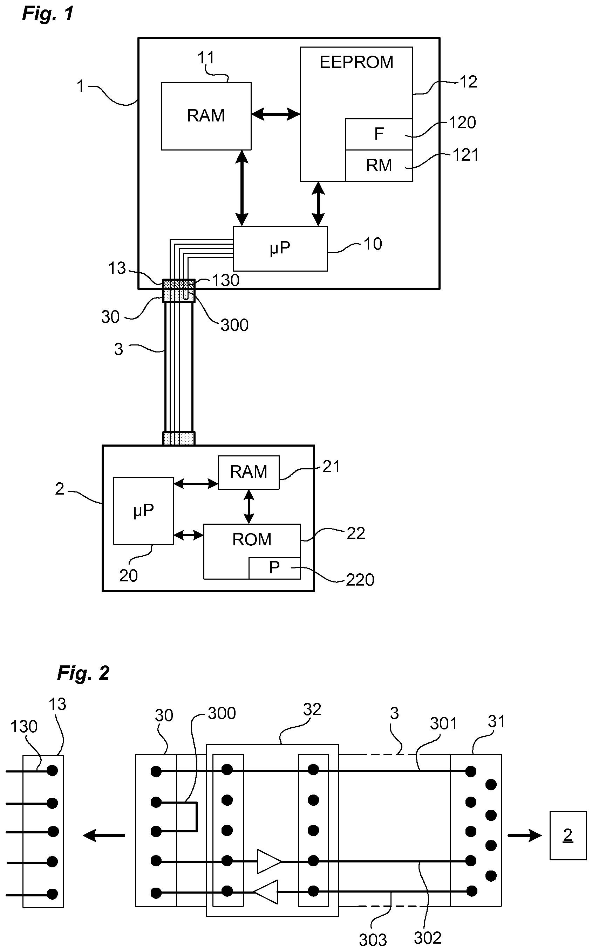

De manière connue, un automate programmable comporte une pluralité de modules connectés entre eux par l'intermédiaire d'un bus fond de panier. L'automate programmable comporte notamment un module d'alimentation, un module unité centrale et des modules d'entrées/sorties. Certains de ces modules d'entrées/sorties peuvent être des modules TOR (Tout Ou Rien) ou des modules spécifiques dotés d'un microprocesseur. Un module 1 spécifique à microprocesseur est schématisé en figure 1. Il est équipé d'une carte électronique sur laquelle est monté le microprocesseur 10. Il comprend en outre une mémoire volatile 11, par exemple de type RAM qui peut être intégrée au microprocesseur 10 et une mémoire non volatile 12 par exemple de type EEPROM ou Flash.

La mémoire non volatile 12 stocke un programme constructeur 120 ("firmware") apte à être exécuté dans la mémoire volatile 11, par exemple pour réaliser des fonctions simples d'automatisme ou des opérations de conversion analogique-numérique.

Selon l'invention, un tel module 1 comporte sur sa carte un connecteur 13 (figure 2), doté par exemple de cinq broches 130 ("pins" en anglais). Ce connecteur 13 est relié directement au microprocesseur par des pistes électriques réalisées sur la carte.

Lorsque le module présente un comportement anormal, il est nécessaire de diagnostiquer son état et de rechercher les éventuelles anomalies présentes dans son programme constructeur 120.

Pour effectuer un diagnostic de l'état du module 1 et détecter une éventuelle anomalie dans son programme constructeur 120, le système de l'invention comporte une station informatique 2 reliée au module 1 par l'intermédiaire d'un câble 3 de liaison série.

La station informatique 2 est par exemple un ordinateur de type PC comportant notamment un microprocesseur 20, une mémoire volatile 21 de type RAM et une mémoire non volatile 22.

En référence à la figure 2, le câble 3 de liaison série présente à une extrémité un connecteur 30 à cinq points complémentaire du connecteur 13 présent sur la carte du module 1 pour être branché directement sur celui-ci et à une autre extrémité un connecteur 31 neuf points pour se connecter sur un port série (appelé également port COM) classique de la station informatique 2.

Selon l'invention, le connecteur 30 du câble 3 de liaison série est doté d'un organe matériel d'identification 300 constitué d'une boucle ou "strap" reliant entre elles deux broches du connecteur 13 du module 1 lorsque le câble 3 de liaison série est branché sur la carte du module. Un signal envoyé sur l'une de ces deux broches est automatiquement renvoyé sur l'autre broche par l'intermédiaire de la boucle de l'organe d'identification sans passer par la station informatique 2. Ainsi, lorsque le câble 3 de liaison série est branché, le microprocesseur 10 du module 1 détecte la présence du câble 3 sur son connecteur 13 et peut lancer un mode recherche d'anomalies dans son programme constructeur 120. La détection de la boucle ou "strap" du câble est par exemple réalisée lors du démarrage de la carte du module 1 à examiner.

En référence à la figure 2, par l'intermédiaire de trois fils 301, 302, 303, le câble 3 de liaison connecte uniquement trois broches du connecteur 13 de la carte au port série de la station 2 informatique. L'un de ces fils (301) correspond à la masse et les deux autres fils (302, 303) permettent de véhiculer les signaux de commande dans un sens ou dans l'autre entre le module 1 et la station informatique 2. Le câble 3 comporte en outre une interface d'adaptation électrique 32 permettant de réaliser la conversion des signaux de type CMOS provenant du module 1 en signaux de ligne RS232 à destination de la station 2 informatique et inversement. Cette interface 32 se présente sous la forme d'une carte électronique située préférentiellement à proximité du connecteur 30 du câble et peut éventuellement être intégrée au connecteur 30 du câble 3 de liaison.

Le mode recherche d'anomalies est lancé grâce à un composant logiciel 121 stocké avec le programme constructeur 120 dans la mémoire non volatile 12 du module 1 et exécuté dans la mémoire volatile 11 du module pour réaliser la recherche d'anomalies.

Le composant logiciel 121 (appelé "Rom monitor") permet au module 1 de dialoguer sur la liaison série avec la station informatique 2 pour réaliser les opérations de recherche d'anomalie et sert de passerelle à la station informatique 2 pour commander l'exécution du programme constructeur dans le module 1. Il offre ainsi à des outils logiciels de recherche d'anomalie 220 chargés dans la mémoire volatile 21 de la station informatique 2 la capacité de lire ou d'écrire dans la mémoire volatile 11 du module et dans les registres mémorisés dans la mémoire non volatile 12 du module 1.

Les outils logiciels de recherche d'anomalie 220 permettent alors à la station 2, par l'intermédiaire du composant logiciel 121 présent dans le module 1, de commander le chargement du programme constructeur 120 dans la mémoire volatile 11 du module 1. La version du programme constructeur à charger dans le module est alors celle à examiner. Le programme constructeur peut donc être directement celui stocké dans la mémoire non volatile 12 du module 1 ou peut éventuellement être téléchargé depuis la station 2.

Une fois le programme constructeur 120 chargé, sous le contrôle du composant logiciel 121, les outils logiciels de détection d'anomalie 220 permettent de commander l'exécution du programme constructeur 120 dans la mémoire volatile 11 du module et de commander le déroulement de ce programme, par exemple en effectuant des points d'arrêt, ou en effectuant un déroulement pas-à-pas du programme. Lorsque l'exécution du programme constructeur 120 est stoppée, le composant logiciel 121 présent dans le module 1 permet à la station informatique 2 de lire et d'afficher n'importe quelle valeur contenue dans la cible.

Il est bien entendu que l'on peut, sans sortir du cadre de l'invention, imaginer d'autres variantes et perfectionnements de détail et de même envisager l'emploi de moyens équivalents.

## Revendications

1. Système pour rechercher une anomalie dans un programme constructeur (120) stocké dans une mémoire non volatile (12) d'un module (1) d'un automate programmable, ledit système comportant une station informatique (2) dotée d'outils logiciels de recherche d'anomalie (220), **caractérisé en ce que** :
- le système comporte un câble de liaison (3) apte à relier le module (1) à la station informatique (2), ledit câble (3) comportant un organe d'identification (300),
- le module (1) comporte un connecteur (13) et des moyens logiciels d'identification du câble de liaison (3) lorsque le câble de liaison (3) est branché sur son connecteur (13),
- lorsque la présence du câble de liaison (3) est détectée sur le connecteur (13), un mode recherche d'anomalies est lancé grâce à un composant logiciel (121) stocké dans la mémoire non volatile (12) du module (1),
- le composant logiciel (121) étant apte à coopérer avec les outils logiciels de recherche d'anomalie (220) de la station informatique (2) pour rechercher une anomalie dans le programme constructeur (120) du module (1).

2. Système selon la revendication 1, **caractérisé en ce que** l'organe d'identification (300) du câble de liaison (3) est une boucle apte à relier deux broches (130) du connecteur (13) lorsque le câble de liaison (3) est branché sur le connecteur (13).

3. Système selon la revendication 1 ou 2, **caractérisé en ce que** le composant logiciel (121) du module (1) comporte des moyens de dialogue pour dialoguer avec la station informatique (2) sur la liaison créée grâce au câble de liaison (3).

4. Système selon l'une des revendications 1 à 3, **caractérisé en ce que** le câble de liaison (3) comporte à une extrémité un connecteur (30) cinq points complémentaire du connecteur (13) du module (1) et à une autre extrémité un connecteur (31) neuf points complémentaire d'un port série situé sur la station informatique (2).

5. Système selon la revendication 4, **caractérisé en ce que** le câble de liaison (3) comporte une interface d'adaptation (32) apte à convertir des signaux échangés entre la station informatique (2) et le module (1).

6. Méthode pour rechercher une anomalie dans un programme constructeur (120) stocké dans une mémoire non volatile (12) d'un module (1) d'un automate programmable et chargé dans une mémoire volatile (11) du module lors de son exécution, ladite méthode utilisant une station informatique (2) dotée d'outils logiciels de recherche d'anomalie (220), la méthode étant **caractérisée en ce qu'**elle consiste à
- relier le module (1) à la station informatique (2) à laide d'un câble de liaison (3) doté d'un organe d'identification (300),
- détecter sur un connecteur du module (1) la présence du câble de liaison (3) à l'aide de moyens logiciels d'identification du câble de liaison (3),
- lorsque la présence du câble de liaison (3) est détectée sur le connecteur, lancer un mode recherche d'anomalies grâce à un composant logiciel (121) stocké dans la mémoire non volatile (12) du module,
- sous contrôle du composant logiciel (121) coopérant avec les outils logiciels de recherche d'anomalie (220) de la station informatique (2), exécuter le programme constructeur (120) dans la mémoire volatile (11) du module pour rechercher une anomalie dans le programme constructeur (120) du module (1).

## Patentansprüche

1. System zum Suchen einer Anomalie in einem Konstruktionsprogramm (120), das in einem nichtflüchtigen Speicher (12) eines Moduls (1) einer programmierbaren Steuerung gespeichert ist, wobei das System eine Datenverarbeitungsstation (2) umfasst, die mit Software-Werkzeugen (220) für die Anomaliesuche versehen ist, **dadurch gekennzeichnet, dass**:
- das System ein Verbindungskabel (3) aufweist, dass das Modul (1) mit der Datenverarbeitungsstation (2) verbinden kann, wobei das Kabel (3) ein Identifizierungsorgan (300) aufweist,
- das Modul (1) eine Verbinder (13) und Software-Mittel für die Identifizierung des Verbindungskabels (3), wenn das Verbindungskabel (3) von seinem Verbinder (13) abgezweigt ist, umfasst,
- dann, wenn das Vorhandensein des Verbindungskabels (3) bei dem Verbinder (13) detektiert wird, ein Anomaliesuchmodus kraft einer Software-Komponente (121), die in dem nichtflüchtigen Speicher (12) des Moduls (1) gespeichert ist, gestartet wird und
- die Software-Komponente (121) mit den Software-Werkzeugen (220) für die Anomaliesuche der Datenverarbeitungsstation (2) zusammenarbeiten kann, um in dem Konstruktionsprogramm (120) des Moduls (1) eine Anomalie zu suchen.

2. System nach Anspruch 1, **dadurch gekennzeichnet, dass** das Organ (300) für die Identifizierung des Verbindungskabels (3) eine Schleife ist, die zwei Anschlüsse (130) des Verbinders (13) verbinden kann, wenn das Verbindungskabel (3) von dem Verbinder (13) abgezweigt ist.

3. System nach Anspruch 1 oder 2, **dadurch gekennzeichnet, dass** die Software-Komponente (121) des Moduls (1) Dialogmittel umfasst, um einen Dialog mit der Datenverarbeitungsstation (2) auf der Verbindung, die kraft des Verbindungskabels (3) erzeugt wird, zu führen.

4. System nach einem der Ansprüche 1 bis 3, **dadurch gekennzeichnet, dass** das Verbindungskabel (3) an einem Ende einen Fünfpunktverbinder (30), der zu dem Verbinder (13) des Moduls (1) komplementär ist, und an einem anderen Ende einen Neunpunktverbinder (31), der zu einer bei der Datenverarbeitungsstation (2) vorhandenen seriellen Brücke komplementär ist, umfasst.

5. System nach Anspruch 4, **dadurch gekennzeichnet, dass** das Verbindungskabel (3) eine Anpassungsschnittstelle (32) umfasst, die Signale, die zwischen der Datenverarbeitungsstation (2) und dem Modul (1) ausgetauscht werden, umsetzen kann.

6. Verfahren zum Suchen einer Anomalie in einem Konstruktionsprogramm (120), das in einem nichtflüchtigen Speicher (12) eines Moduls (1) einer programmierbaren Steuerung gespeichert ist und in einen flüchtigen Speicher (11) des Moduls geladen wird, wenn es abgearbeitet wird, wobei das Verfahren eine Datenverarbeitungsstation (2) verwendet, die mit Software-Werkzeugen (220) für die Anomaliesuche ausgerüstet ist, wobei das Verfahren **dadurch gekennzeichnet ist, dass** es darin besteht:
- das Modul (1) mit der Datenverarbeitungsstation (2) mit Hilfe eines Verbindungskabels (3), das mit einem Identifizierungscode (300) versehen ist, zu verbinden,
- bei einem Verbinder des Moduls (1) das Vorhandensein des Verbindungskabels (3) mit Hilfe von Software-Mitteln für die Identifizierung des Verbindungskabels (3) zu detektieren,
- dann, wenn das Vorhandensein des Verbindungskabels (3) bei dem Verbinder detektiert wird, kraft einer Software-Komponente (121), die in dem nichtflüchtigen Speicher (12) des Moduls gespeichert ist, einen Anomaliesuchmodus zu starten,
- unter der Steuerung der Software-Komponente (121), die mit den Software-Werkzeugen (220) für die Anomaliesuche der Datenverarbeitungsstation (2) zusammenarbeitet, das Konstruktionsprogramm (120) in dem flüchtigen Speicher (11) des Moduls abzuarbeiten, um in dem Konstruktionsprogramm (120) des Moduls (1) eine Anomalie zu suchen.

## Claims

1. System for detecting a fault in a piece of firmware (120) stored in a non-volatile memory (12) of a module (1) of a programmable logic controller, said system including a computer station (2) equipped with fault-detecting software tools (220), **characterized in that**:
- the system includes a link cable (3) able to connect the module (1) to the computer station (2), said cable (3) including an identifying device (300);
- the module (1) includes a connector (13) and software means for identifying the link cable (3) when the link cable (3) is plugged into its connector (13);
- when the link cable (3) is detected as being present in the connector (13), a fault-detection mode is launched by virtue of a software component (121) that is stored in the non-volatile memory (12) of the module (1),
- the software component (121) being able to interact with fault-detecting software tools (220) of the computer station (2) in order to detect a fault in the piece of firmware (120) of the module (1).

2. System according to Claim 1, **characterized in that** the device (300) for identifying the link cable (3) is a loop able to connect two pins (130) of the connector (13) when the link cable (3) is plugged into the connector (13).

3. System according to Claim 1 or 2, **characterized in that** the software component (121) of the module (1) includes dialoguing means able to dialogue with the computer station (2) over the link created by the link cable (3).

4. System according to one of Claims 1 to 3, **characterized in that** the link cable (3) includes at one end a complementary five-pin connector (30) that mates with the connector (13) of the module (1) and at another end a complementary nine-pin connector (31) that mates with a series port located on the computer station (2).

5. System according to Claim 4, **characterized in that** the link cable (3) includes an adapter interface (32) able to convert signals exchanged between the computer station (2) and the module (1).

6. Method for detecting a fault in a piece of firmware (120) stored in a non-volatile memory (12) of a module (1) of a programmable logic controller and loaded into a volatile memory (11) of the module during its execution, said method using a computer station (2) equipped with fault-detecting software tools (220), the method being **characterized in that** it consists in:
- connecting the module (1) to the computer station (2) using a link cable (3) equipped with an identifying device (300);
- detecting whether the link cable (3) is present in a connector of the module (1) using software means for identifying the link cable (3);
- when the link cable (3) is detected to be present in the connector, launching a fault-detection mode by virtue of a software component (121) that is stored in the non-volatile memory (12) of the module;
- under the control of the software component (121) interacting with the fault-detecting software tools (220) of the computer station (2), executing the piece of firmware (120) in the volatile memory (11) of the module for detecting a fault in the piece of firmware (120) of the module (1).
